# EUROPEAN PATENT SPECIFICATION

(11) **EP 3 853 301 B1**
(45) Date of publication and mention of the grant of the patent: **15.03.2023**
(21) Application number: 19862892.7
(22) Date of filing: 17.09.2019
(51) Int. Cl.: C08K 9/04, C08K 3/04, B29B 7/10, B29C 70/58, C01B 32/198, C08J 5/00

(54) **INDUSTRIAL SCALE PROCESSES FORM A COVALENT BONDED MONOMER AND GRAPHENE OXIDE STRUCTURES**
VERFAHREN ZUR HERSTELLUNG VON KOVALENTEN GEBUNDENEN MONOMER- UND GRAPHENOXID-STRUKTUREN IM INDUSTRIELLEN MASSSTAB
PROCÉDÉS À L'ÉCHELLE INDUSTRIELLE POUR FORMER DES STRUCTURES DE MONOMÈRE ET D'OXYDE DE GRAPHÈNE LIÉS PAR COVALENCE

(30) Priority: 18.09.2018 US 201862732723 P
(43) Date of publication of application: 28.07.2021
(60) Divisional application: 23154238.2
(73) Proprietor: Asbury Graphite of North Carolina, Inc., Lumberton, NC 28358 (US)
(72) Inventor: RESTREPO, David, Orlando, FL 32812 (US); MCINNIS, Matthew, Orlando, FL 32826 (US); CHRISTIANSEN, Sean, Orlando, FL 32804 (US)
(74) Representative: SONN Patentanwälte OG
(86) International application number: PCT/US2019/051405
(87) International publication number: WO 2020/060973

(56) References cited:
- WO-A1-2016/154057
- WO-A1-2017/154533
- CN-A- 106 700 356
- CN-A- 108 276 576
- CN-A- 108 276 576
- US-A1- 2015 266 739
- US-A1- 2015 284 253
- US-A1- 2016 144 339
- US-A1- 2017 166 722
- OSICKA JOSEF ET AL: "Light-induced and sensing capabilities of SI-ATRP modified graphene oxide particles in elastomeric matrix", PROCEEDINGS OF SPIE; [PROCEEDINGS OF SPIE ISSN 0277-786X VOLUME 10524], SPIE, US, vol. 10164, 11 April 2017 (2017-04-11), pages 1016434-1016434, XP060090305, DOI: 10.1117/12.2260703 ISBN: 978-1-5106-1533-5
- YAN WANG ET AL: "Kevlar oligomer functionalized graphene for polymer composites", POLYMER, ELSEVIER SCIENCE PUBLISHERS B.V, GB, vol. 52, no. 16, 8 June 2011 (2011-06-08), pages 3661-3670, XP028236835, ISSN: 0032-3861, DOI: 10.1016/J.POLYMER.2011.06.012 [retrieved on 2011-06-15]
- PRAMODA K. P. ET AL: "Covalent bonded polymer-graphene nanocomposites", JOURNAL OF POLYMER SCIENCE PART A: POLYMER CHEMISTRY, vol. 48, no. 19, 1 October 2010 (2010-10-01), pages 4262-4267, XP055960556, US ISSN: 0887-624X, DOI: 10.1002/pola.24212

## Description

### TECHNICAL FIELD OF THE INVENTION

The present invention relates in general to the field of industrial scale processes form a covalent bonded monomer and graphene oxide structures.

### BACKGROUND OF THE INVENTION

Without limiting the scope of the invention, its background is described in connection with composite materials, see XP055960556, "Covalent bonded polymer-graphene nanocomposites"; Pramoda K. P., Hussain H., Koh H.M., Tan H. R., He C. B.; Journal Article; IRN - ISSN 0887-624X; NR - 19; PD - 2010-10-01; LNKD - doi:10.1002/pola.24212; PG - 4262 - 4267; Journal of Polymer Science Part A: Polymer Chemistry; John Wiley & Sons, Inc. - US VN - 907; VOL - 48; XBOC - M3665000 or

XP060090305 , OSICKA JOSEF ET AL: "Light-induced and sensing capabilities of SI-ATRP modified graphene oxide particles in elastomeric matrix", PROCEEDINGS OF SPIE, ISSN 0277-786X, VOLUME 10524, SPIE, US, vol. 10164, 11 April 2017, pages 1016434-1016434, DOI: 10.1117/12.2260703ISBN: 978-1-5106-1533-5.

Graphite is commonly used to enhance mechanical, electrical, and thermal conductivity of a composite material. Graphite has been used as a component in a wide number of composite materials including resins, epoxies, and polymers. Composite materials can be prepared by using different reinforcing fillers such as natural graphite, synthetic graphite, carbon black, or carbon fibers with phenolic resin as a polymer matrix precursor in its liquid and powder form. However there is a lack of work in the physical mixing/blending of monomers with sufficient energy to not only exfoliate and disperse the graphene oxide (GO) in the monomer but also cause a chemical reaction with functional groups on the graphene oxide.

Solid-Solid mixing is a common and proven way to blend powders in solids handling industries. For decades, solid-solid mixing has been used in powder blending to homogenize bulk materials and has been designed to handle materials with various bulk solids properties. On the basis of the practical experience gained with these different machines, engineering knowledge has been developed to construct reliable equipment and to predict scale-up and mixing behavior. Today the same mixing technologies are used for many more applications to: improve product quality, coat particles, fuse materials, wet, disperse in liquid, deagglomerate, and alter the material properties. Now solid-solid mixing is being used to accomplish the classic chemical reaction/processes without the need of a solvent. This general technical approach is referred to as mechanochemistry.

The activation of chemical reactions, in classic terms use thermochemistry, electrochemistry, and photochemistry as energy sources. Traditional chemical processes often also utilize a catalyst to facilitate covalent reactions. These traditional sources of energy are reflected in the standard physical chemistry textbooks. The alternate pathway of chemical activation is mechanochemistry. Mechanochemistry uses collisional energy to activate the desired chemical reaction and a catalyst to facilitate covalent reactions. Although some covalent reaction may occur without a catalyst the conversion efficiency may be very low. But in fact, mechanochemical generated energy can replace thermal, electrical, photon or chemical energy imparted directly in to the material at the media-media interaction/collision sites. One example of the mechanochemical process was demonstrated by Dr. Swager et al; Dr. Swager used mechanochemical energy and a catalyst to polymerize poly(phenylene vinylene) (PPV) from two white powders - the monomer (1,4-bis(chloromethyl)-2-((2-ethylhexyl)oxy)-5-methoxybenzene), and a strong base (potassium tert-butoxide) - to form a red conductive polymer using a ball mill (ACS Macro Lett. 2014, DOI: 10.1021/mz500098r). They reported the process is fast, requires no solvent, and yields more consistent chain lengths than wet-chemistry synthesis. The only draw back to the process was that the conversion yield was 60% with an average particle size less than 5 nm. In addition to the advancements made in solid-solid mixing there have been significant improvements in the physical characteristics of GO loaded material through covalent reaction of the functional groups of the GO with monomers prior to forming a polymer. Covalent reactions can readily occur between the COOH and OH functionalization of GO and amine-based monomers. The improvement in physical properties by covalent reaction can readily be seen the in results published at the (PDA Conference - Becker Presentation) Polyurea Development Association Conference October 4 - 6, 2017. This publication reported GO/Polyurea composite at 2% loadings achieving: >350% increase in surface toughness; >50% increase in elongation to break; >290% improvement in Tensile. A simultaneous increase in both Tensile and Elongation to break is indicative of a covalent/Chemisorbed reaction. Physisorbed/non covalent reactions with good dispersions result in a decrease in the elongation to break with increased tensile strength.

Despite these advances, a need remains for consistent, industrial scales processes to form a covalent bonded monomer and GO Structure.

### SUMMARY OF THE INVENTION

The present invention includes method of making a chemisorbed graphene oxide polymer composite comprising the steps of: placing a monomer and graphene oxide into a ball mill; milling the monomer with the graphene oxide to produce a physisorbed monomer graphene oxide material; placing the physisorbed monomer graphene oxide material into a polymerization chemical reactor, wherein the physisorbed monomer graphene oxide is converted to chemisorbed monomer graphene oxide; and reacting the monomer graphene oxide with other monomers or prepolymers to polymerize the materials to form the chemisorbed graphene oxide polymer composite.

In one embodiment, the present invention includes a method of making a chemisorbed graphene oxide polymer composite comprising the steps of: placing a monomer and graphene oxide into a ball mill; milling the monomer with the graphene oxide to produce a physisorbed monomer graphene oxide material; placing the physisorbed monomer graphene oxide material into a polymerization chemical reactor, wherein the physisorbed monomer graphene oxide is converted to chemisorbed monomer graphene oxide by a heat treatment; and reacting the monomer graphene oxide with other monomers or prepolymers to polymerize the materials to form the chemisorbed graphene oxide polymer composite. In one aspect, the chemisorbed graphene oxide polymer composite has both an increase in physical properties and has a corresponding increase in elongation to break. In another aspect, the monomer is a liquid or a solid particle. In another aspect, the monomer is a particle with a particle size greater than 1 µm and less than 500 µm. In another aspect, the monomer is a liquid of a viscosity greater than 1 centipoise and less than 10,000 mPa s (= centipoise). In another aspect, the graphene oxide has an oxidation level between 1% and 25%. In another aspect, the graphene oxide is a graphene oxide flake. In another aspect, the graphene oxide flake has an area to thickness ratio of less than 100,000 Å. In another aspect, the heat treatment further comprises a catalyst. In another aspect, the catalyst is selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. In another aspect, the heat treatment comprises a temperature of 35, 40, 45, 45, 55, 60, 65, 70, 75, or 75°C.

In another embodiment, the present invention includes a method of making a chemisorbed graphene oxide polymer composite comprising the steps of: placing a monomer and graphene oxide flake into a ball mill; milling the monomer with the graphene oxide to produce a physisorbed monomer graphene oxide material; placing the physisorbed monomer graphene oxide material into a polymerization chemical reactor, wherein the physisorbed monomer graphene oxide is converted to chemisorbed monomer graphene oxide by a heat treatment; and reacting the monomer graphene oxide with other monomers or prepolymers to polymerize the materials to form the chemisorbed graphene oxide polymer composite. In one aspect, the chemisorbed graphene oxide polymer composite has both an increase in physical properties and has a corresponding increase in elongation to break. In another aspect, the monomer is a liquid or a solid particle. In another aspect, the monomer is a particle with a particle size greater than 1µm and less than 500 µm. In another aspect, the monomer is a liquid of a viscosity greater than 1 centipoise and less than 10,000 mPa s (= centipoise). In another aspect, the graphene oxide flake has an oxidation level between 1% and 25%. In another aspect, the graphene oxide flake has an area to thickness ratio of less than 100,000 Å. In another aspect, the reactor further comprises a catalyst. In another aspect, the catalyst is selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. In another aspect, the heat treatment comprises a temperature of 35, 40, 45, 45, 55, 60, 65, 70, 75, or 75°C.

In one embodiment, the present invention also includes a chemisorbed graphene oxide polymer composite made by a method comprising: placing a monomer and graphene oxide into a ball mill; milling the monomer with a graphene oxide to produce a physisorbed monomer graphene oxide material; placing the physisorbed monomer graphene oxide material into a polymerization chemical reactor, wherein the physisorbed monomer graphene oxide is converted to chemisorbed monomer graphene oxide by a heat treatment and, optionally, a catalyst; and reacting the monomer graphene oxide with other monomers or prepolymers to polymerize the materials to form the chemisorbed graphene oxide polymer composite.

In one embodiment, the present invention also includes a method of making a chemisorbed graphene oxide comprising the steps of: placing a monomer and graphene oxide into a ball mill; milling the monomer with the graphene oxide to produce a physisorbed monomer graphene oxide material; converting the physisorbed monomer graphene oxide material into a chemisorbed monomer graphene oxide by a heat treatment. In one aspect, the monomer is a liquid or a solid particle. In another aspect, the monomer is a particle with a particle size greater than 1µm and less than 500 µm. In another aspect, the monomer is a liquid of a viscosity greater than 1 centipoise and less than 10,000 mPa s (= centipoise). In another aspect, the graphene oxide has an oxidation level between 1% and 25%. In another aspect, the graphene oxide is a graphene oxide flake. In another aspect, the graphene oxide flake has an area to thickness ratio of less than 100,000 Å. In another aspect, the heat treatment further comprises a catalyst. In another aspect, the catalyst is selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. In another aspect, the heat treatment comprises a temperature of 35, 40, 45, 45, 55, 60, 65, 70, 75, or 75°C.

### DETAILED DESCRIPTION OF THE INVENTION

While the making and using of various embodiments of the present invention are discussed in detail below, it should be appreciated that the present invention provides many applicable inventive concepts that can be embodied in a wide variety of specific contexts. The specific embodiments discussed herein are merely illustrative of specific ways to make and use the invention and do not delimit the scope of the invention.

To facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not limit the invention, except as outlined in the claims.

Graphene on a micron scale is hundreds of times stronger than steel, harder than diamond, and conducts heat and electricity better than copper. Translating these attributes to industrially relevant opportunities has been a challenge. The present inventors have translated the micron scale to the macroscale by reacting their GO with monomers creating covalent bonds between the GO and the polymer in reactors used for *in situ* polymerization. A covalent/chemisorbed reaction when using a GO additive is a way to radically improve the physical properties of a host. The challenge is three fold: 1) react the functional groups of the GO with a monomer of the future polymer; 2) induce sufficient functionalization on the GO to react with a number of monomers to enable the desired controlled reaction resulting in enhanced physical properties of the final polymer; and 3) create a uniform dispersion of the functionalized graphene (fGO) or oxidized graphene (GO) into the monomer mixture prior to polymerization. The methods of the present invention overcome each of these three challenges.

The inventors have shown that under the right conditions solid-solid mixing or mechanochemistry processing enables a monomer to react with functional groups of the GO, this requires; 1) The oxidation level of the GO flake between 1% and 25% to obtain a covalent reaction with the monomer that then translates a controllable polymerization reaction. An oxidation level less than 1% will not have sufficient level of functional groups to react effectively with the monomer. An oxidation of functionalization level greater than 25% reacts completely with the monomer preventing a further reaction to form a polymer; 2) the flake area to thickness ratio of less than 100,000 Å; 3) ball milling with a media with a density less than 9 g/cm³. The ball milling process keeps the GO from self-assembling or flocculating due to van der Waals forces/attraction. The monomer can be a liquid, solid or suspension.

As used herein, the term "carbon additive" refers to a carbon-based monomer or polymer that includes, e.g., an oxide of graphite, graphene, carbon, carbon nanotubes, carbon black or carbon nanowires. These will typically be in powder or particle form, but may also be in suspension in a liquid.

Non-limiting examples of monomers for use with the present invention includes that that form one or more of the following polymers, e.g., vinylacetic acid (VAA), poly(vinylpyrrolidone), polyethylene oxide (PEO), Hydroxy propyl methyl cellulose (HPMC), Poly(phenylene oxide) (PPO), dextran, polysaccharides, polyacrylic acid, polymethacrylic acid, polyacrylamide, PEO/PPO, albumin, chitosan, peptides, papain, collagens, copolymers of lactide and glycolide, copolymers containing polyacrylic acid, copolymers containing polymethacrylic acid, copolymers of any of these homopolymers, copolymers of these homopolymers with the addition of other homopolymers and copolymers and plastics such as polystyrene, polypropylene, and polyterepthalate. In other embodiments, the polymer may be a bioabsorbable, or biodegradable, synthetic polymer such as a polyanhydride, polyorthoester, or polyhydroxy acid such as polylactic acid, polyglycolic acid, and copolymers or blends thereof. Non-degradable materials can also be used. Examples of suitable materials include ethylene vinyl acetate, derivatives of polyvinyl alcohol, teflon, nylon, polymethacrylate and silicon polymers. Other non-degradable materials are ethylene vinyl acetate meshes and polyvinyl alcohol polymers.

The monomer solid needs to be in a powder form where the powder diameter is greater than 0.01 micron and less than 500 microns. For powders that have a diameter less than 1 microns used with GO with an average diameter of 0.5 µm the powder will coat the GO flake and react with the oxide on the GO flake. In the case where larger monomer powder the GO powder will coat the monomer/prepolymer powder. Ideally the monomers powder 0.01 µm and 1 µm centipoise. For liquid monomers or monomers in suspension the viscosity needs to be between 1 centipoise and 10,000 mPa s (= centipoise). Ideally the liquid or suspended monomers are between 1 and 100 mPa s. The parameters are necessary to enable the covalent reaction and prevent damaging the monomer or size reduction of the GO; 4) milling speed less than 700 rpm and a milling time less than 2 hour with a monomer. The minimum time is required to allow for covalent reaction while the maximum time prevents the overheating and decomposition or degradation of the monomer. 5) The process produces a physisorbed monomer GO material. The physisorbed monomer acts as both a compatibilizer and prevents agglomeration/flocculation enabling a simple dispersion in a reactor; and 6) once placed into the reactor and processed with other monomers or pre-polymer (e.g., a polyethylene terephthalate (PET) pre-polymer) and/or a catalyst such as sodium hydroxide the physisorbed monomer becomes a chemisorbed monomer GO material that can be further reacted into the polymer structure. The invention will work with any powder monomer or pre-polymer.

The method of the present invention enables the dispersion and reaction of graphene oxide with a monomer forming covalent bonds between the GO and the polymer. The particles of the one material (monomer) are coated with the material of another component with OH or COOH functionalization using a milling process. The inventors use 20% GO to 80% monomer by weight that are mixed together in a ball milling vessel with a volume of 25 gal with 300 lbs. media. The media used has a density of > 9 g/cm³ with a diameter d (d = 10 mm). Milling or mixing can be accomplished in a closed chamber for 5 to 100 minutes at 100 RPM or less to produce a physisorbed monomer GO material. The physisorbed monomer GO structure when dispersed in a chemical reactor with additional monomers, catalyst and/or additional energy produces a chemisorbed monomer GO material that then polymerizes into a composite material via *in-situ* polymerization. The reactor is typically held at 65°C to melt and blend the two monomers, however, the reactor can operate at 35, 40, 45, 45, 55, 60, 65, 70, 75, or 75°C, depending on the melting temperature of the monomer or monomers. The blending is typically done at 25 rpm. To facilitate the formation of a polymer the process may use a catalyst, e.g., volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. The resulting composite material shows significant enhancement in (>100%) physical properties that occurs with an increase in the elongation to break. By controlling the ratio of the components, one can achieve low density, high electrical conductivity, and surface hardness.

The present invention includes method of making a chemisorbed graphene oxide polymer composite comprising, consisting essentially of, or consisting of, the steps of: placing a monomer and graphene oxide into a ball mill; milling the monomer with graphene oxide to produce a physisorbed monomer graphene oxide material; placing the physisorbed monomer graphene oxide material into a polymerization chemical reactor, wherein the physisorbed monomer graphene oxide is converted to chemisorbed monomer graphene oxide; and reacting the monomer graphene oxide with other monomers or prepolymers to polymerize the materials to form the chemisorbed graphene oxide polymer composite.

In one embodiment, the present invention includes a method of making a chemisorbed graphene oxide polymer composite comprising, consisting essentially of, or consisting of, the steps of: placing a monomer and graphene oxide into a ball mill; milling the monomer with graphene oxide to produce a physisorbed monomer graphene oxide material; placing the physisorbed monomer graphene oxide material into a polymerization chemical reactor, wherein the physisorbed monomer graphene oxide is converted to chemisorbed monomer graphene oxide by a heat treatment; and reacting the monomer graphene oxide with other monomers or prepolymers to polymerize the materials to form the chemisorbed graphene oxide polymer composite. In one aspect, the chemisorbed graphene oxide polymer composite has both an increase in physical properties and has a corresponding increase in elongation to break. In another aspect, the monomer is a liquid or a solid particle. In another aspect, the monomer is a particle with a particle size greater than 1µm and less than 500 µm. In another aspect, the monomer is a liquid of a viscosity greater than 1 centipoise and less than 10,000 mPa s (= centipoise). In another aspect, the graphene oxide has an oxidation level between 1% and 25%. In another aspect, the graphene oxide is a graphene oxide flake. In another aspect, the graphene oxide flake has an area to thickness ratio of less than 100,000 Å. In another aspect, the heat treatment further comprises a catalyst. In another aspect, the catalyst is selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. In another aspect, the heat treatment comprises a temperature of 35, 40, 45, 45, 55, 60, 65, 70, 75, or 75°C.

In another embodiment, the present invention includes a method of making a chemisorbed graphene oxide polymer composite comprising, consisting essentially of, or consisting of, the steps of: placing a monomer and graphene oxide flake into a ball mill; milling the monomer with the graphene oxide to produce a physisorbed monomer graphene oxide material; placing the physisorbed monomer graphene oxide material into a polymerization chemical reactor, wherein the physisorbed monomer graphene oxide is converted to chemisorbed monomer graphene oxide by a heat treatment; and reacting the monomer graphene oxide with other monomers or prepolymers to polymerize the materials to form the chemisorbed graphene oxide polymer composite. In one aspect, the chemisorbed graphene oxide polymer composite has both an increase in physical properties and has a corresponding increase in elongation to break. In another aspect, the monomer is a liquid or a solid particle. In another aspect, the monomer is a particle with a particle size greater than 1µm and less than 500 µm. In another aspect, the monomer is a liquid of a viscosity greater than 1 centipoise and less than 10,000 mPa s (= centipoise). In another aspect, the graphene oxide flake has an oxidation level between 1% and 25%. In another aspect, the graphene oxide flake has an area to thickness ratio of less than 100,000 Å. In another aspect, the reactor further comprises a catalyst. In another aspect, the catalyst is selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. In another aspect, the heat treatment comprises a temperature of 35, 40, 45, 45, 55, 60, 65, 70, 75, or 75°C.

In one embodiment, the present invention also includes a chemisorbed graphene oxide polymer composite made by a method comprising, consisting essentially of, or consisting of: placing a monomer and graphene oxide into a ball mill; milling the monomer with the graphene oxide to produce a physisorbed monomer graphene oxide material; placing the physisorbed monomer graphene oxide material into a polymerization chemical reactor, wherein the physisorbed monomer graphene oxide is converted to chemisorbed monomer graphene oxide by a heat treatment and, optionally, a catalyst; and reacting the monomer graphene oxide with other monomers or prepolymers to polymerize the materials to form the chemisorbed graphene oxide polymer composite.

In one embodiment, the present invention also includes a method of making a chemisorbed graphene oxide comprising, consisting essentially of, or consisting of, the steps of: placing a monomer and graphene oxide into a ball mill; milling the monomer with the graphene oxide to produce a physisorbed monomer graphene oxide material; converting the physisorbed monomer graphene oxide material into a chemisorbed monomer graphene oxide by a heat treatment. In one aspect, the monomer is a liquid or a solid particle. In another aspect, the monomer is a particle with a particle size greater than 1µm and less than 500 µm. In another aspect, the monomer is a liquid of a viscosity greater than 1 centipoise and less than 10,000 mPa s (= centipoise). In another aspect, the graphene oxide has an oxidation level between 1% and 25%. In another aspect, the graphene oxide is a graphene oxide flake. In another aspect, the graphene oxide flake has an area to thickness ratio of less than 100,000 Å. In another aspect, the heat treatment further comprises a catalyst. In another aspect, the catalyst is selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds. In another aspect, the heat treatment comprises a temperature of 35, 40, 45, 45, 55, 60, 65, 70, 75, or 75°C.

Although the present invention and its advantages have been described in detail, it should be understood that various changes, substitutions and alterations can be made herein without departing from the scope of the invention as defined by the appended claims. Moreover, the scope of the present application is intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

It is contemplated that any embodiment discussed in this specification can be implemented with respect to any method, kit, reagent, or composition of the invention, and vice versa. Furthermore, compositions of the invention can be used to achieve methods of the invention.

It will be understood that particular embodiments described herein are shown by way of illustration and not as limitations of the invention. The principal features of this invention can be employed in various embodiments without departing from the scope of the invention as defined in the claims. Those skilled in the art will recognize, or be able to ascertain using no more than routine experimentation, numerous equivalents to the specific procedures described herein.

All publications and patent applications mentioned in the specification are indicative of the level of skill of those skilled in the art to which this invention pertains.

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. In embodiments of any of the compositions and methods provided herein, "comprising" may be replaced with "consisting essentially of" or "consisting of". As used herein, the phrase "consisting essentially of" requires the specified integer(s) or steps as well as those that do not materially affect the character or function of the claimed invention. As used herein, the term "consisting" is used to indicate the presence of the recited integer (e.g., a feature, an element, a characteristic, a property, a method/process step or a limitation) or group of integers (e.g., feature(s), element(s), characteristic(s), property(ies), method/process steps or limitation(s)) only.

The term "or combinations thereof' as used herein refers to all permutations and combinations of the listed items preceding the term. For example, "A, B, C, or combinations thereof' is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, AB, BBC, AAABCCCC, CBBAAA, CABABB, and so forth. The skilled artisan will understand that typically there is no limit on the number of items or terms in any combination, unless otherwise apparent from the context.

As used herein, words of approximation such as, without limitation, "about", "substantial" or "substantially" refers to a condition that when so modified is understood to not necessarily be absolute or perfect but would be considered close enough to those of ordinary skill in the art to warrant designating the condition as being present.

### REFERENCES

ACS Macro Lett. 2014, DOI: 10.1021/mz500098r: (Polyurea Development Association Conference October 4 - 6, 2017 - John Becker Presentation).

## Claims

1. A method of making a chemisorbed graphene oxide polymer composite comprising the steps of:
placing a monomer and graphene oxide into a ball mill;
milling the monomer with the graphene oxide to produce a physisorbed monomer graphene oxide material;
placing the physisorbed monomer graphene oxide material into a polymerization chemical reactor, wherein the physisorbed monomer graphene oxide is converted to chemisorbed monomer graphene oxide by a heat treatment; and
reacting the monomer graphene oxide with other monomers or prepolymers to polymerize the materials to form a chemisorbed graphene oxide polymer composite.

2. The method of claim 1, wherein the monomer is a particle with a particle size greater than 1 µm and less than 500 µm.

3. The method of claim 1, wherein the monomer is a liquid of a viscosity greater than 1 centipoise and less than 10,000 mPa s (= centipoise).

4. The method of claim 1, wherein the heat treatment further comprises a catalyst selected from a volatile, fixed or permanent base chosen from one or more of ammonia, amines, potassium hydroxide, lithium hydroxide, sodium hydroxide, calcium hydroxide, sodium carbonate, sodium silicate, and transition metal amino compounds.

5. The method of claim 1, wherein the monomer is a liquid or a solid particle.

6. The method of claim 1, wherein the graphene oxide has an oxidation level between 1% and 25%.

7. The method of claim 1, wherein the graphene oxide is a graphene oxide flake having an area to thickness ratio of less than 100,000 Å.

## Patentansprüche

1. Verfahren zum Herstellen eines chemisorbierten Graphenoxid-Polymer-Verbundstoffes, aufweisend die folgenden Schritte:
Einbringen eines Monomers und Graphenoxids in eine Kugelmühle;
Mahlen des Monomers mit dem Graphenoxid, um ein physisorbiertes Monomer-Graphenoxid-Material herzustellen;
Einbringen des physisorbierten Monomer-Graphenoxid-Materials in einen chemischen Polymerisationsreaktor, wobei das physisorbierte Monomer-Graphenoxid durch eine Wärmebehandlung in chemisorbiertes Monomer-Graphenoxid umgewandelt wird; und
Umsetzen des Monomer-Graphenoxids mit anderen Monomeren oder Prepolymeren, um die Materialien zum Bilden eines chemisorbierten Graphenoxid-Polymer-Verbundstoffes zu polymerisieren.

2. Verfahren nach Anspruch 1, wobei das Monomer ein Teilchen mit einer Teilchengröße von mehr als 1 µm und weniger als 500 µm ist.

3. Verfahren nach Anspruch 1, wobei das Monomer eine Flüssigkeit mit einer Viskosität von mehr als 1 Centipoise und weniger als 10 000 mPa s (= Centipoise) ist.

4. Verfahren nach Anspruch 1, wobei die Wärmebehandlung ferner einen Katalysator aufweist, der aus einer flüchtigen, festen oder beständigen Base gewählt ist, ausgewählt aus einem oder mehreren von Ammoniak, Aminen, Kaliumhydroxid, Lithiumhydroxid, Natriumhydroxid, Calciumhydroxid, Natriumcarbonat, Natriumsilikat und Übergangsmetall-Aminoverbindungen.

5. Verfahren nach Anspruch 1, wobei das Monomer eine Flüssigkeit oder ein Feststoffteilchen ist.

6. Verfahren nach Anspruch 1, wobei das Graphenoxid eine Oxidationsstufe zwischen 1 % und 25 % hat.

7. Verfahren nach Anspruch 1, wobei das Graphenoxid eine Graphenoxid-Flocke mit einem Verhältnis von Fläche zu Dicke von weniger als 100 000 Å ist.

## Revendications

1. Procédé de fabrication d'un composite de polymère d'oxyde de graphène chimiquement adsorbé comprenant les étapes de :
disposition d'un monomère et d'oxyde de graphène dans un broyeur à billes ;
broyage du monomère avec l'oxyde de graphène pour produire un matériau d'oxyde de graphène de monomère adsorbé physiquement ;
disposition du matériau d'oxyde de graphène de monomère adsorbé physiquement dans un réacteur chimique de polymérisation, dans lequel l'oxyde de graphène de monomère adsorbé physiquement est converti en oxyde de graphène monomère adsorbé chimiquement par un traitement thermique ; et
réaction de l'oxyde de graphène de monomère avec d'autres monomères ou prépolymères pour polymériser les matériaux pour former un composite de polymère d'oxyde de graphène adsorbé chimiquement.

2. Procédé selon la revendication 1, dans lequel le monomère est une particule avec une taille de particule supérieure à 1 µm et inférieure à 500 µm.

3. Procédé selon la revendication 1, dans lequel le monomère est un liquide d'une viscosité supérieure à 1 centipoise et inférieure à 10 000 mPa s (=centipoise).

4. Procédé selon la revendication 1, dans lequel le traitement thermique comprend de plus un catalyseur choisi parmi une base volatile, fixe ou permanente choisie parmi un ou plusieurs d'ammoniac, amines, hydroxyde de potassium, hydroxyde de lithium, hydroxyde de sodium, hydroxyde de calcium, carbonate de sodium, silicate de sodium, et composés amino de métaux de transition.

5. Procédé selon la revendication 1, dans lequel le monomère est un liquide ou une particule solide.

6. Procédé selon la revendication 1, dans lequel l'oxyde de graphène présente un niveau d'oxydation de 1 % à 25 %.

7. Procédé selon la revendication 1, dans lequel l'oxyde de graphène est un flocon d'oxyde de graphène ayant un rapport surface à épaisseur inférieur à 100 000 Å.
